# EUROPÄISCHE PATENTSCHRIFT

(11) **EP 0 822 997 B1**
(45) Veröffentlichungstag und Bekanntmachung des Hinweises auf die Patenterteilung: **02.08.2000**
(21) Anmeldenummer: 96914971.5
(22) Anmeldetag: 22.04.1996
(51) Int. Cl.: D01F 6/76

(54) **VERFAHREN ZUR HERSTELLUNG VON ENDLOSFASERN AUS MELAMIN/FORMALDEHYD-KONDENSATIONSPRODUKTEN**
PROCESS FOR PRODUCING FILAMENTS FROM MELAMINE/FORMALDEHYDE CONDENSATION PRODUCTS
PROCEDE DE FABRICATION DE FILAMENTS A PARTIR DE PRODUITS DE CONDENSATION DE MELAMINE/FORMALDEHYDE

(30) Priorität: 26.04.1995 DE 19515277
(43) Veröffentlichungstag der Anmeldung: 11.02.1998
(73) Patentinhaber: BASF AKTIENGESELLSCHAFT, 67056 Ludwigshafen (DE)
(72) Erfinder: BERBNER, Heinz, D-69509 Mörlenbach (DE); GIHR, Hartmut, D-67063 Ludwigshafen (DE); RACHWALSKY, Uwe, D-67069 Ludwigshafen (DE); ZETTLER, Hans, Dieter, D-67269 Grünstadt (DE)
(86) Internationale Anmeldenummer: EP9601677
(87) Internationale Veröffentlichungsnummer: WO9634133

(56) Entgegenhaltungen:
- EP-A- 0 093 965
- EP-A- 0 523 485
- DE-A- 2 364 091
- US-A- 4 497 934

## Beschreibung

Die Erfindung betrifft ein Verfahren zur Herstellung von Endlosfasern aus Melamin/Formaldehyd(MF)-Kondensationsprodukten durch Verspinnen einer hochkonzentrierten wäßrigen Lösung des MF-Vorkondensats, Verdampfen des Wassers und Aushärten des Vorkondensats.

Die Herstellung von Fasern aus MF-Kondensationsprodukten wurde erstmals in DE-B 23 64 091 beschrieben. Bei diesem Verfahren wird die wäßrige Lösung des Vorkondensats in eine erhitzte Atmosphäre versponnen, in der gleichzeitig das Wasser verdampft und das Vorkondensat aushärtet. Da der Härtungsprozeß verhältnismäßig lang dauert, sind im Anschluß an die Düse lange Rohrleitungen nötig, wenn klebfreie Fasern erhalten werden sollen. Außerdem werden bei diesem Verfahren nur dann ausreichend hohe Spinngeschwindigkeiten erhalten, wenn dem MF-Kondensat faserbildende Polymere, wie z.B. Polyvinylalkohol zugesetzt werden. Derartige Polymere beeinträchtigen jedoch das Brandverhalten der Fasern und daraus hergestellter textiler Materialien.

In EP-A 93 965 wird deshalb vorgeschlagen, MF-Vorkondensaten (die gegebenenfalls N-alkylsubstituierte Melamine einkondensiert enthalten können) 1 bis 20 Gew.-% Alkalisalze, vorzugsweise Natriumdisulfit, zuzusetzen, die Lösung in eine erhitzte Atmosphäre zu verspinnen, das Wasser zu verdampfen und das Vorkondensat bei erhöhter Temperatur auszuhärten. Die dabei erhaltenen Fasern weisen aber infolge ihres Gehalts an Alkalisalz eine geringe Hydrolysebeständigkeit auf.

In den EP-A 221 330, 408 947 und 523 485 sind mit Hydroxyalkylmelaminen modifizierte MF-Kondensate beschrieben, die ebenfalls zu Fasern versponnen werden können. Als geeignete Spinnverfahren sind einmal das "Trocken-Reaktion-Spinnverfahren" nach DE-A 23 64 091 und zum anderen ein Zentrifugal-Spinnverfahren genannt. Letzteren liefert aber keine Endlosfasern, sondern nur verhältnismäßig kurze Fasern mit ungleichmäßiger Länge.

Der Erfindung liegt also die Aufgabe zugrunde, ein technisch einfaches Verfahren zur Herstellung von dünnen Endlosfasern aus MF-Kondensationsprodukten zu entwickeln, welches bei hoher Spinngeschwindigkeit nicht brennbare und nicht schmelzbare Fasern mit hoher Festigkeit und guter Hydrolysebeständigkeit liefert. Diese Aufgabe ist bei dem Verfahren nach Anspruch 1 gelöst.

Bei dem erfindungsgemäßen Verfahren geht man aus von einem MF-Vorkondensat. Dieses enthält als Monomerbaustein 90 bis 99,9 mol-% eines Gemisches bestehend in wesentlichen aus (a) 30 bis 99, bevorzugt 50 bis 99, besonders bevorzugt 85 bis 95 mol-% Melamin und (b) 1 bis 70, bevorzugt 1 bis 50, besonders bevorzugt 5 bis 15 mol-% eines substituierten Melamins I oder Mischungen substituierter Melamine I.

Ein bevorzugtes MF-Vorkondensat enthält als weiteren Monomerbaustein (c) 0,1 bis 10 mol-E, bezogen auf die Gesamtmolzahl an Monomerbausteinen (a) + (b) + (c), eines Phenols oder eines Gemisches von Phenolen.

Die erfindungsgemäßen Kondensationsprodukte sind erhältlich durch Umsetzung der Komponenten (a), (b) und gegebenenfalls (c) mit Formaldehyd oder Formaldehyd liefernden Verbindungen, wobei das Molverhältnis von Melaminen + Phenolen zu Formaldehyd im Bereich von 1:1,15 bis 1:4,5, bevorzugt von 1:1,8 bis 1:3,0 liegt.

Als substituierte Melamine (b) der allgemeinen Formel I 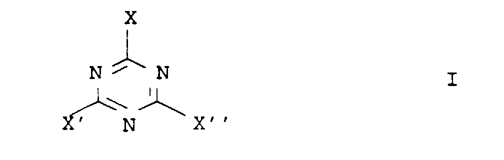 kommen solche in Betracht, in denen X, X' und X'' ausgewählt sind aus der Gruppe bestehend aus -NH₂, -NHR und -NRR', wobei X, X' und X'' nicht gleichzeitig -NH₂ sind, und R und R' ausgewählt sind aus der Gruppe bestehend aus Hydroxy-C₂-C₄-alkyl, Hydroxy-C₂-C₄-alkyl-(oxa-C₂-C₄-alkyl)ₙ, mit n = 1 bis 5, und Amino-C₂-C₁₂-alkyl.

Als Hydroxy-C₂-C₁₀-alkyl-Gruppen wählt man bevorzugt Hydroxy-C₂-C₆-alkyl wie 2-Hydroxyethyl, 3-Hydroxy-n-propyl, 2-Hydroxyisopropyl, 4-Hydroxy-n-butyl, 5-Hydroxy-n-pentyl, 6-Hydroxy-n-hexyl, 3-Hydroxy-2,2-dimethylpropyl, bevorzugt Hydroxy-C₂-C₄-alkyl wie 2-Hydroxyethyl, 3-Hydroxy-n-propyl, 2-Hydroxyisopropyl und 4-Hydroxy-n-butyl, besonders bevorzugt 2-Hydroxyethyl und 2-Hydroxyisopropyl.

Als Hydroxy-C₂-C₄-alkyl-(oxa-C₂-C₄-alkyl)ₙ-Gruppen wählt man bevorzugt solche mit n = 1 bis 4, besonders bevorzugt solche mit n = 1 oder 2 wie 5-Hydroxy-3-oxa-pentyl, 5-Hydroxy-3-oxa-2,5-dimethyl-pentyl, 5-Hydroxy-3-oxa-1,4-dimethyl-pentyl, 5-Hydroxy-3-oxa-1,2,4,5-tetramethyl-pentyl, 8-Hydroxy-3,6-dioxaoctyl.

Als Amino-C₂-C₁₂-alkyl-Gruppen kommen bevorzugt Amino-C₂-C₈-alkyl-Gruppen wie 2-Aminoethyl, 3-Aminopropyl, 4-Aminobutyl, 5-Aminopentyl, 6-Aminohexyl, 7-Aminoheptyl sowie 8-Aminooctyl, besonders bevorzugt 2-Aminoethyl und 6-Aminohexyl, ganz besonders bevorzugt 6-Aminohexyl, in Betracht.

Für die Erfindung besonders geeignete substituierte Melamine sind folgende Verbindungen: 2-Hydroxyethylamino-melamin wie 2-Hydroxyethylamino-melamin, 2,4-Di-(2-hydroxyethylamino)-melamin, 2,4,6-Tris-(2-hydroxyethylamino)-melamin, 2-Hydroxyisopropylamino-melamin wie 2-(2-Hydroxyisopropylamino)-melamin, 2,4-Di-(2-hydroxyisopropylamino)-melamin, 2,4,6-Tris-(2-hydroxyisopropylamino)-melamin, 5-Hydroxy-3-oxa-pentylamino-melamin wie 2-(5-Hydroxy-3-oxa-pentylamino)-melamin, 2,4-Di-(5-Hydroxy-3-oxa-pentylamino)-melamin, 2,4,6-Tris-(5-Hydroxy-3-oxa-pentylamino)-melamin sowie 6-Aminohexylamino-melamin wie 2-(6-Aminohexylamino-pentylamino)-melamin, 2,4-Di-(6-Aminohexylamino)-melamin, 2,4,6-Tris-(6-Amino-hexylamino)-melamin oder Gemische dieser Verbindungen, beispielsweise ein Gemisch aus 10 Mol-% 2-(5-Hydroxy-3-oxa-pentyl-amino)-melamin, 50 Mol-% 2,4-Di-(5-Hydroxy-3-oxa-pentylamino)-melamin und 40 Mol-% 2,4,6-Tris-(5-Hydroxy-3-oxa- pentylamino)-melamin.

Als Phenole (c) eignen sich ein oder zwei Hydroxygruppen enthaltende Phenole wie unsubstituierte oder mit Resten, ausgewählt aus der Gruppe aus C₁-C₉-Alkyl und Hydroxy, substituierte Phenole sowie mit zwei oder drei Phenolgruppen substituierte C₁-C₄-Alkane, Di(hydroxyphenyl)sulfone oder Mischungen dieser Phenole.

Als bevorzugte Phenole kommen in Betracht Phenol, 4-Methyl-phenol, 4-tert.-Butyl-phenol, 4-n-Octyl-phenol, 4-n-Nonyl-phenol, Brenzcatechin, Resorcin, Hydrochinon, 2,2-Bis(4-hydroxyphenyl)propan, 4,4'-Dihydroxydiphenylsulfon, besonders bevorzugt Phenol, Resorcin und 2,2-Bis(4-hydroxyphenyl)propan.

Formaldehyd setzt man in der Regel als wäßrige Lösung mit einer Konzentration von zum Beispiel 40 bis 50 Gew.-% oder in Form von bei der Umsetzung mit (A) und (B) Formaldehyd liefernden Verbindungen, beispielsweise als oligomeren oder polymeren Formaldehyd in fester Form wie Paraformaldehyd, 1,3,5-Trioxan oder 1,3,5,7-Tetroxocan ein.

Für die Herstellung eines bevorzugten MF-Vorkondensats verwendet man 1 bis 50, vorzugsweise 5 bis 15 und insbesondere 7 bis 12 mol-% des substituierten Melamins sowie 0,1 bis 9,5, bevorzugt 1 bis 5 Mol-% eines der oben angeführten Phenole oder Mischungen derselben.

Zur Herstellung des Vorkondensats polykondensiert man Melamin, substituiertes Melamin und Phenol zusammen mit Formaldehyd bzw. Formaldehyd-liefernden Verbindungen. Man kann dabei alle Komponenten gleich zu Beginn vorlegen oder man kann sie portionsweise und sukzessive zu Reaktion bringen und den dabei gebildeten Vorkondensaten nachträglich weiteres Melamin, substituiertes Melamin oder Phenol zufügen.

Die Polykondensation führt man in der Regel in an sich bekannter Weise durch (s. EP-A 355 760, Houben-Weyl, Bd.14/2, S.357 ff).

Die Reaktionstemperaturen wählt man dabei im allgemeinen in einem Bereich von 20 bis 150, bevorzugt von 40 bis 140°C.

Der Reaktionsdruck ist in der Regel unkritisch. Man arbeitet im allgemeinen in einem Bereich von 100 bis 500 kPa, bevorzugt 100 bis 300 kPa.

Man kann die Reaktion mit oder ohne Lösungsmittel durchführen. In der Regel setzt man beim Einsatz von wäßriger Formaldehydlösung kein Lösungsmittel zu. Bei Verwendung von Formaldehyd gebunden in fester Form wählt man als Lösungsmittel Wasser, wobei die verwendete Menge in der Regel im Bereich von 5 bis 40, bevorzugt von 15 bis 25 Gew.-%, bezogen auf die Gesamtmenge an eingesetzten Monomeren, liegt.

Ferner führt man die Polykondensation im allgemeinen in einem pH-Bereich oberhalb von 7 aus. Bevorzugt ist der pH-Bereich von 7,5 bis 10,0, besonders bevorzugt von 8 bis 10.

Des weiteren kann man dem Reaktionsgemisch geringe Mengen üblicher Zusätze, z.B. Amine sowie Aminoalkohole wie Diethylamin, Ethanolamin, Diethanolamin oder 2-Diethylaminoethanol, zugeben.

Als weitere Zusatzstoffe kommen Füllstoffe in Betracht, wie z.B. Metallpulver, Metallsalze oder Silikate, z.B. Kaolin, Talkum, Schwerspat, Quarz oder Kreide, ferner Pigmente und Farbstoffe.

Die Polykondensation kann man diskontinuierlich oder kontinuierlich, beispielsweise in einem Rührkessel oder in einem Extruder (s. EP-A 355 760), durchführen.

Als vorteilhaft hat sich herausgestellt, daß man zunächst in einem kontinuierlich arbeitenden Extruder oder Kneter eine Vorkondensatlösung herstellt, diese dann in einen heizbaren Rührkessel leitet, dort bei niedriger Viskosität entgast, dann weiter kondensiert bis Viskositäten von 2000 - 50 000 Pas, vorzugsweise 3000 - 10 000 Pas, erreicht werden. Es ist aber auch möglich, die gesamten Schritte Mischen, Kondensieren, Entgasen in einem Extruder durchzuführen. Es ist ferner möglich, die Lösung komplett in einem diskontinuierlich arbeitenden Rührkessel herzustellen.

Das erfindungsgemäße Verfahren wird dann in folgenden, aufeinanderfolgenden Schritten durchgeführt:
A. Zunächst wird die wäßrige Lösung des Vorkondensats mit einem Wassergehalt von 5 bis 40, vorzugsweise 10 bis 25 Gew.-% filtriert, wobei grobe Partikel und Verunreinigungen entfernt werden. Dies kann beispielsweise durch einen Tiefenfilter erfolgen.
B. Die wäßrige Lösung wird dann, mittels einer Pumpe, durch eine Spinndüse gepreßt. Diese weist 500 bis 5000 Bohrungen auf, die einen Durchmesser von 40 bis 400, vorzugsweise von 50 bis 200 µm haben. Die Einzelbohrungen sind vorzugsweise ring-förmig auf einer rechteckigen Platte angeordnet. Der Druckverlust in der Düse beträgt bei Düsendurchmessern von beispielsweise 100 µm etwa 50 bar.
C. Die an der Düse austretenden Einzelfäden werden dann in einem Trockenschacht 0,5 bis 60 sec. lang mit trockener Luft umspült. Die Luft wird im Gleichstrom mit den austretenden Fäden geführt, sie weist eine Temperatur zwischen 20 und 200°C, vorzugsweise 50 bis 150°C auf. Durch diese Maßnahme werden vorzugsweise 10 bis 90 % des in den Fäden enthaltenen Wassers entfernt, so daß deren Restwassergehalt weniger als 10, vorzugsweise weniger als 5 Gew.-% beträgt.
   Bei einer bevorzugten Ausführungsform der Erfindung werden zusammen mit der Luft 0,1 bis 3 Gew.-%, bezogen auf das Vorkondensat eines Härtungskatalysators in den Trockenschacht zugegeben. Bevorzugte Härtungskatalysatoren sind organische Säuren, wie z.B. Ameisensäure, Essigsäure, Amidosulfonsäure oder Aminosäuren.
   Beim Austritt aus dem Trockenschacht kann das Fadenbündel mittels Calettten abgezogen, mittels Dralldüse durch seitlichen Anblasen mit Luft verdreht, als Endlosmaterial abgelegt oder direkt auf eine bestimmte Stapellänge geschnitten werden. An dieser Stelle können nach Bedarf Oberflächenhilfsmittel , wie z.B. Antihaftmittel und Silikonöle zugegeben werden.
D. Die getrockneten Fäden werden dann in einen Temperofen 10 bis 200, vorzugsweise 40 bis 90 min. lang behandelt. Es ist wesentlich, daß die Temperatur in diesem Ofen sukzessive ansteigt. Dies kann z.B. durch aufeinanderfolgende Temperaturzonen im Ofen verwirklicht werden. Auf diese Weise kann der Ofen verhältnismäßig kurz gehalten werden. Gegebenenfalls kann in die warme Umluft noch weiterer Katalysator zugegeben werden. Die maximale Temperatur ist 160 bis 250°C, vorzugsweise 200 bis 230°C. Dabei wird das Vorkondensat vollständig ausgehärtet, so daß klebfreie Endlosfasern entstehen.
E. Diese Endlosfasern werden schließlich aufgewickelt oder geschnitten. Die Abzugsgeschwindigkeit kann in weiten Grenzen variiert werden. Üblicherweise beträgt sie 200 bis 250 m. min⁻¹.

Die erfindungsgemäßen hergestellten Endlosfasern können zu nichtbrennbaren und nichtschmelzbaren Geweben und Vliesen verarbeitet werden.

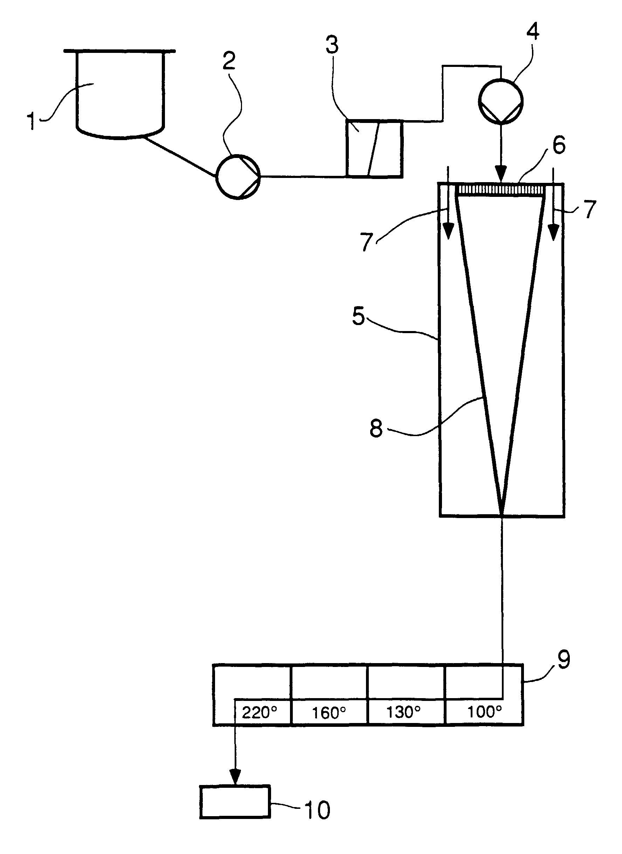

In der Abbildung ist eine bevorzugte Ausführungsform der Erfindung skizziert, deren Bezugszeichen im nachfolgenden Beispiel erläutert werden.

### Beispiel:

Das Harz wird in einem Rührkessel (1) blasenfrei hergestellt. Der Wassergehalt am Anfang der Reaktion beträgt 18 %. Die Viskosität des zu verspinnenden Harzes liegt bei ca. 9000 Pas/25°C.

Das Harz wird über eine Pumpe (2) gefördert und mit Hilfe von Tiefenfiltern (3) aus Metall filtriert und über eine weitere Pumpe (4) durch die Spinndüsen (6) gedrückt. Die Spinndüse hat 900 Loch bei einem Lochdurchmesser von 100 µm. Der Durchsatz an Harz pro Loch beträgt 6 g/h.

In dem Trockenschacht (5) werden die Fasern (8) in 1.5 s durch einen Luftstrom (7) bei einer Lufteintrittstemperatur von 95°C und einer Luftaustrittstemperatur von ca. 125°C abgetrocknet. Die Abzugsgeschwindigkeit beträgt 200 m/min.

Die Fasern werden als Endlosmaterial abgelegt, in einem Trockenschrank (9) in vier Temperaturstufen (100°C/130°C/160°C/220°C) jeweils 20 min lang getempert, und anschließend in (10) aufgespult.

Die Einzelfaser hat einen Durchmesser von 17 µm bei einer Festigkeit von 2.8 cN/dtex und einer Bruchdehnung von 32 %.

## Patentansprüche

1. Verfahren zur Herstellung von Endlosfasern aus Kondensationsprodukten von
(a) 30 bis 99 mol-% Melamin und
(b) 1 bis 70 mol-% eines substituierten Melamins der allgemeinen Formel I 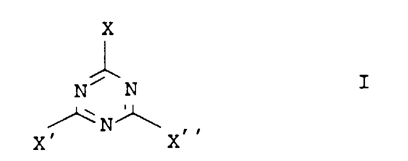 in der X, X' und X'' ausgewählt sind aus der Gruppe bestehend aus -NH₂, -NHR und -NRR', und X, X' und X'' nicht gleichzeitig -NH₂ sind, und R und R' ausgewählt sind aus der Gruppe bestehend aus Hydroxy-C₂-C₄-alkyl-, Hydroxy-C₂-C₄-alkyl-(oxa-C₂-C₄-alkyl)ₙ, mit n = 1 bis 5, und Amino-C₂-C₁₂-alkyl, oder Mischungen von Melaminen I,
mit
Formaldehyd oder Formaldehyd-liefernden Verbindungen, wobei das Molverhältnis von Melaminen zu Formaldehyd im Bereich von 1:1 bis 1:4,5 liegt, durch Verspinnen einer hochkonzentrierten wässrigen Lösung der Melamin/Formaldehyd-Vorkondensats, Verdampfen des Wassers und Härten des Vorkondensats, gekennzeichnet durch folgende Verfahrensschritte:
A. eine wäßrige Lösung des Vorkondensats mit einem Wassergehalt von 5 bis 40 Gew.-% wird zur Entfernung von groben Partikeln und Verunreinigungen filtriert,
B. die blasenfreie wäßrige Lösung wird durch eine Spinndüse mit 500 bis 5000 Bohrungen eines Durchmessers von 40 bis 400 µm gedrückt,
C. die ausgepreßten Fäden werden in einem Trockenschacht 0,5 bis 60 sec lang mit im Gleichstrom geführter, 20 bis 200°C trockener warmer Luft umspült und dabei auf einen Restwassergehalt von weniger als 10 Gew.-% getrocknet,
D. die getrockneten Fäden werden zu Bündeln (Fasern) zusammengeführt und in einem Temperofen 10 bis 200 min lang bei Temperaturen, die sukzessive auf eine Maximaltemperatur zwischen 160 und 250°C ansteigen, behandelt, wobei das Vorkondensat aushärtet,
E. die Fasern werden aufgewickelt oder geschnitten.

2. Verfahren nach Anspruch 1, d.g., daß das Melamin/Formaldehyd-Vorkondensat (c) 0,1 bis 10 mol-%, bezogen auf (a) + (b) + (c), unsubstituierte oder substituierte Phenole einkondensiert enthält.

3. Verfahren nach Anspruch 1, d.g., daß in Stufe C zusammen mit der Luft 0,1 bis 3 Gew.-%, bezogen auf das Vorkondensat, eines Härtungskatalysators, in den Trockenschacht zugegeben wird.

4. Verwendung der nach Anspruch 1 hergestellten Fasern und Fäden zur Herstellung von nichtbrennbaren und nichtschmelzenden Geweben und Vliesen.

## Claims

1. A process for producing continuous filament fiber from condensation products of
(a) from 30 to 99 mol% of melamine and
(b) from 1 to 70 mol% of a substituted melamine of the general formula I 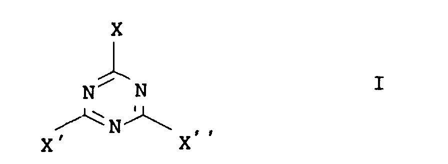 where X, X' and X'' are each selected from the group consisting of -NH_{2,} -NHR and -NRR', and X, X' and X'' are not all -NH₂, and R and R' are each selected from the group consisting of hydroxy-C₂-C₄-alkyl, hydroxy-C₂-C₄-alkyl-(oxa-C₂-C₄-alkyl)ₙ, where n is from 1 to 5, and amino-C₂-C₁₂-alkyl, or mixtures of melamines I,
with
formaldehyde or formaldehyde-supplying compounds in a molar ratio of melamines to formaldehyde within the range from 1:1 to 1:4.5 by spinning a highly concentrated aqueous solution of the melamine-formaldehyde precondensate, evaporating the water and curing the precondensate, which comprises the following steps:
A. filtering an aqueous solution of the precondensate with a water content of from 5 to 40% by weight to remove coarse particles and impurities,
B. forcing the bubble-free aqueous solution through a spinneret having from 500 to 5000 holes each from 40 to 400 µm in diameter,
C. bathing the extruded filaments in a drying shaft with a cocurrent stream of dry hot air at from 20 to 200°C for from 0.5 to 60 sec to reduce the residual water content to less than 10% by weight,
D. converging the dried filaments into fiber bundles to treat them in a tempering oven for from 10 to 200 min at temperatures which gradually increase to a maximum temperature within the range from 160 to 250°C and fully cure the precondensate, and
E. winding up or cutting the fiber.

2. A process as claimed in claim 1, wherein the melamine-formaldehyde precondensate (c) contains from 0.1 to 10 mol%, based on (a)+(b)+(c), of substituted or unsubstituted phenols as cocondensed units.

3. A process as claimed in claim 1, wherein, in stage C, from 0.1 to 3% by weight, based on the precondensate, of a curing catalyst is introduced into the drying shaft together with the air.

4. The use of the fibers and filaments produced as claimed in claim 1 for producing incombustible and infusible wovens and nonwovens.

## Revendications

1. Procédé de préparation de filaments à partir de produits de condensation
(a) de 30 à 99 moles % de mélamine et
(b) de 1 à 70 moles % d'une mélamine substituée de la formule générale I : 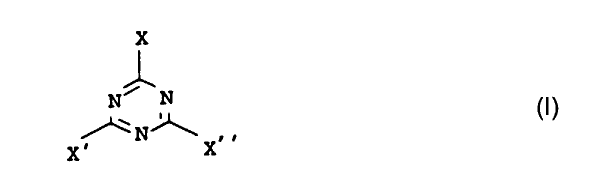 dans laquelle X, X' et X" sont choisis parmi le groupe constitué de -NH₂, -NHR et -NRR' et X, X' et X" ne sont pas simultanément du -NH₂, R et R' étant choisis parmi le groupe constitué des groupes hydroxy-C₂-C₄-alkyle, hydroxy-C₂-C₄-alkyl-(oxa-C₂-C₄-alkyle)ₙ, où n=1 à 5, et amino-C₂-C₁₂-alkyle, ou de mélanges de mélamines I,
avec
du formaldéhyde ou des composés fournissant du formaldéhyde, le rapport molaire entre les mélamines et le formaldéhyde étant de l'ordre de 1/1 à 1/4,5, par filage d'une solution aqueuse fortement concentrée du produit de précondensation de mélamine/formaldéhyde, évaporation de l'eau et durcissement du produit de précondensation, caractérisé par les étapes suivantes :
A. une solution aqueuse du produit de précondensation présentant une teneur en eau de 5 à 40% en poids est filtrée pour l'élimination des impuretés et particules grossières,
B. la solution aqueuse exempte de bulles est comprimée à travers une filière présentant 500 à 5000 trous d'un diamètre de 40 à 400 µm,
C. les fils exprimés sont, dans un puits de séchage, balayés pendant 0,5 à 60 secondes par de l'air chaud sec à 20 jusqu'à 200°C, qui est guidé en courant parallèle, et sont séchés à une teneur en eau résiduaire inférieure à 10% en poids,
D. les fils séchés sont réunis en faisceaux (fibres) et ils sont traités dans un four de recuit pendant 10 à 200 minutes à des températures qui croissent successivement à une température maximale comprise entre 160 et 250°C, le produit de précondensation durcissant alors,
E. les fibres sont enroulées ou coupées.

2. Procédé suivant la revendication 1, caractérisé en ce que le produit de précondensation de mélamine/formaldéhyde (c) contient à l'état condensé 0,1 à 10 moles %, par rapport à (b), de phénols substitués ou non substitués.

3. Procédé suivant la revendication 1, caractérisé en ce que, dans l'étape C, on ajoute dans le puits de séchage, conjointement à l'air, 0,1 à 3% en poids, par rapport au produit de précondensation, d'un catalyseur de durcissage.

4. Utilisation des filbres et fils préparés suivant la revendication 1, pour la fabrication de tissus et de non-tissés non combustibles et non fusibles.
